# EUROPEAN PATENT SPECIFICATION

(11) **EP 2 437 884 B1**
(45) Date of publication and mention of the grant of the patent: **08.08.2018**
(21) Application number: 10784145.4
(22) Date of filing: 04.06.2010
(51) Int. Cl.: B01J 23/40, B01J 29/068, B01J 20/02, B01J 35/10, B01D 53/86, B01J 20/32, B01J 20/28, B01J 20/10, B01J 20/18, B01J 37/02, B01J 20/20, B01J 23/34, B01J 23/42, B01J 23/44

(54) **CATALYTIC ARTICLE FOR REMOVAL OF VOLATILE ORGANIC COMPOUNDS IN LOW TEMPERATURE APPLICATIONS**
KATALYTISCHER ARTIKEL ZUR ENTFERNUNG FLÜCHTIGER ORGANISCHER VERBINDUNGEN IN NIEDRIGTEMPERATURANWENDUNGEN
ARTICLE CATALYTIQUE POUR L'ÉLIMINATION DE COMPOSÉS ORGANIQUES VOLATILS DANS DES APPLICATIONS À BASSE TEMPÉRATURE

(30) Priority: 05.06.2009 US 184414 P
(43) Date of publication of application: 11.04.2012
(73) Proprietor: BASF Corporation, Florham Park, NJ 07932 (US)
(72) Inventor: LAPADULA, Gerard D., New York NY 10001-6749 (US); TRAN, Pascaline, Holmdel NJ 07733 (US); REHMS, Danna, Natchez MS 39120 (US); BUELOW, Mark T., Phillipsburg NJ 08865 (US)
(74) Representative: Herzog, Fiesser & Partner Patentanwälte PartG mbB
(86) International application number: PCT/US2010/037392
(87) International publication number: WO 2010/141813

(56) References cited:
- EP-A1- 0 800 420
- EP-A1- 0 993 857
- JP-A- 2001 232 154
- US-A- 5 244 852
- US-A- 5 308 457
- US-A- 5 538 545
- US-A- 5 851 948
- US-A- 6 096 277
- US-A1- 6 127 300
- US-A1- 2001 053 745
- US-A1- 2010 086 460
- US-B1- 6 190 627
- US-B1- 6 248 684
- US-B1- 6 660 897
- M. GUILLEMOT ET AL.: 'Volatile organic compounds (VOCs) removal over dual functional adsorbent/catalyst system' APPLIED CATALYSIS B: ENVIRONMENTAL vol. 75, 2007, pages 249 - 255, XP022230858

## Description

### TECHNICAL FIELD

The present disclosure relates generally to catalysts for enhancing removal of volatile organic compounds (VOCs) in low temperature environments, including electronic applications, for example, hard disk drive applications.

### BACKGROUND

Many electronic devices contain adhesives and lubricants that have VOCs that volatilize during normal operation. VOCs are pollutants that can volatize at higher temperatures and condense back to solid state at lower temperatures. Many electronic devices operate at temperatures sufficient to volatize organic compounds in the adhesives and lubricants, which will condense to solid state as the electronic device cools after use. VOCs can contribute significantly to photochemical smog production and certain health problems. Therefore, for environmental and health reasons, it is desired to decrease the concentration of VOCs in air.

In addition to the environmental and health reasons, VOCs can act to reduce efficiency and longevity of electronic devices. For example, hard disk drives require a magnetic read/write head to "fly" only a few microns above the disk on an air cushion, and efficiency is achieved by positioning the head as close to the disk as possible without touching it. VOCs can volatize during normal hard disk drive operations when, for example, the drives increase to temperatures of about 70-80°C. VOCs may then condense on hard disks as the temperature decreases, for example, at shut-down. The condensed VOCs over time can cause the read/write head to crash into the hard disk, causing catastrophic failure.

Recirculation filters have been used in hard disk drives for removing contaminates. Such filters have been effective for removing particulate contaminants. However, they are not suitable for removing VOCs, since they do not have a capacity for permanently adsorbing VOCs. To provide enhanced VOC removal, it has been proposed to include activated carbon in recirculation filters. Activated carbon in the form of granules or fiber can adsorb some VOCs, but does not effectively adsorb a diverse combination of VOCs. For example, many adsorbents only effectively adsorb one particular class of VOCs, such as a short-chain adsorbent that does not effectively adsorb long-chain esters and long-chain acids.

Another method of reducing VOC contamination used in other industries, such as the automotive industry, includes oxidizing the VOCs using oxidation catalysis. However, at low temperatures, performance of oxidation catalysts is usually inhibited by chemisorption of gaseous species, such as CO, and insufficient catalytic activity due to the lower energy level of the lower temperatures. Therefore, removal using oxidation catalysts are usually only effective at high temperatures, for example, above 250°C, which is well above operating and safe temperatures for most electronic devices.

### SUMMARY

Thus, it is desired to have a filtering system that effectively reduces VOC contamination at low temperatures. Such a filtering system could be useful in electronic devices, including hard disk drives. One approach to such a filtering system is to combine a catalyst with an adsorbent. However, for this approach to work, it is desired to have a catalyst that chemically alters VOCs at low temperatures to make the VOCs more readily adsorbable,

A catalytic article according to claim 1 is provided.

In an additional embodiment, the catalyst is supported on a separate support and the supported catalyst is combined with the adsorbent as discrete particles. The separate support is selected from the group consisting of alumina, silica, clay, mineral, zeolite, molecular sieve, titania, zirconia, and carbon, and combinations thereof.

In a further embodiment, the platinum group metal catalyst is selected from the group consisting of platinum, rhodium, iridium, ruthenium, and palladium and combinations thereof. In yet a further embodiment, the platinum group metal catalyst is a mixture of platinum and palladium.

According to at least one embodiment, the adsorbent can include alumina, silica, clay, mineral, zeolite, molecular sieve, titania, or carbon, or any combination thereof. In a further embodiment, the carbon is activated carbon.

According to the disclosure the catalyst and adsorbent combination adsorbs volatile organic compounds (VOCs) at a temperature of about 80°C or less. The VOCs adsorbed may comprise long chain esters and long chain acids. The long chain esters and long chain acids may have at least 16 carbon atoms each. The long chain esters and long chain acids may also have at least 26 carbon atoms each.

It is to be understood that both the foregoing general description and the following detailed description are exemplary and explanatory and are intended to provide further explanation of the invention as claimed.

### DETAILED DESCRIPTION

### Definitions

Unless defined otherwise, all technical and scientific terms used herein generally have the same meaning as commonly understood by one of ordinary skill in the art to which this invention belongs.

As used herein, each of the following terms has the meaning associated with it in this section.

The articles "a" and "an" are used herein to refer to one or to more than one (i.e., to at least one) of the grammatical object of the article. By way of example, "an element" means one element or more than one element.

The term "about" will be understood by persons of ordinary skill in the art and will vary to some extent on the context in which it is used. Generally, "about" encompasses a range of values that are plus/minus 20% of a reference value. For instance, "about 25%" encompasses values from 20% to 30%.

It is understood that any and all whole or partial integers between any ranges set forth herein are included herein.

As used herein, "percent by weight" or "weight percent" or "% wt.," unless otherwise indicated, means weight percent based on the weight of an analyte as a percentage of the total catalytic article weight, including the support and any catalytic material impregnated therein, including without limitation the catalytic agent and any metal oxide material.

As used herein, "weight ratio" refers to a ratio of the weight of one component compared to the weight of at least one other component in a mixture.

As used herein, "zone" or "zones" refers to designated portions of a surface or layer. For example, a striped pattern coating of two different coating materials would represent an article coated with different coating materials in different zones.

As used herein, "volatile organic compound (VOC)" refers to an organic chemical compound that has a high enough vapor pressure under normal conditions, including room temperature, to significantly vaporize and enter the atmosphere.

As used herein, "long chain" refers to a molecule containing at least 12 carbon atoms. For instance, a long chain ester is an ester containing 12 or more carbon atoms. A long chain acid is an acid containing 12 or more carbon atoms.

As used herein, "short chain" refers to a molecule containing less than 12 carbon atoms. For instance, a short chain ester is an ester containing less than 12 carbon atoms. A short chain acid is an acid containing less than 12 carbon atoms.

As used herein, "VOC adsorbent" refers to a molecule or material that adsorbs VOCs.

As used herein, "short chain VOC adsorbent" refers to a molecule or material that effectively adsorbs VOCs containing less than 12 carbon atoms.

As used herein, "long chain VOC adsorbent" refers to a molecule or material that effectively adsorbs at least some VOCs containing 12 or more carbon atoms.

As used herein, "platinum group metal" refers to a metal that falls within the platinum group of metals on the periodic table, including ruthenium, rhodium, palladium, osmium, iridium, and platinum.

As used herein, "base metal" refers to a metal that oxidizes or corrodes relatively easily, in contrast to noble or precious metals, which in general are resistant to oxidation and corrosion. Examples of base metals include Mn, Fe, Ni, Pb, Zn, and Cu.

As use herein, "base metal catalyst" refers to a catalyst mostly or exclusively comprised of base metal(s) or more commonly base metal oxide(s). A base metal catalyst may consist of a base metal oxide alone, such as high surface area manganese dioxide, or it may consist of a base metal oxide finely dispersed on a high surface area support such as alumina, which in itself is also considered a base metal oxide. Common examples of base metal catalysts include oxides of Mn, V, Ni, Cu, Co, Cr, and Fe.

As used herein, "chemically altered VOC" refers to an organic compound that is chemically altered in some form. A chemical alteration of an organic compound would at least include changing one or more functional sites, introducing one or more functional moieties, partially oxidizing and/or changing the polarity of the compound.

As used herein, "partially oxidized" refers to a compound that is not fully oxidized. For example, a partially oxidized VOC is an organic compound that is not fully oxidized to CO₂ and H₂O. This could include a compound that has been oxidized to have a shorter length chain of carbon atoms.

As used herein, "discrete element" refers to an element that retains its distinctness when combined with other elements. For example, two particles bonded together would each be a discrete element. However, for example, a particle formed from two blended elements or one element impregnated into another element would subsequently form one element, and each initial element would not constitute discrete elements of the combination.

As used herein, "micropore" refers to pores having a diameter of 20 angstroms or less.

### DESCRIPTION

There are many products and processes, such as electronic devices, that are run at low temperatures that include VOCs that need to be filtered. Known filtering systems lack the ability to filter VOCs to acceptable levels. VOC adsorbents typically do not sufficiently adsorb multiple classes of VOCs. VOCs can be short-chain or long-chain, polar or non-polar, and have different types of functional groups. VOC adsorbents can be developed that are effective in adsorbing VOCs with certain of the above properties, but not to effectively adsorb substantially all of the VOCs.

For example, activated carbon typically adsorbs longer chain VOCs effectively, because with a longer chain the compound is more non-polar. However, to more effectively adsorb shorter chain VOCs or other pollutants, activated carbon can be developed with smaller pore radii. However, the smaller pore radius can render the pores too small for the longer chain compounds to pass into the pores to be adsorbed.

Additionally, exemplary low temperature environments in which the catalyst and adsorbent combination are useful include removing VOCs from within electronics. Electronic devices pose the additional concern that the selected adsorbents and catalyst should not harm the electronic device. This additional limitation, especially with regard to the selected adsorbent can lead to selection of adsorbents that are not fully adequate for VOC removal.

Further, electronic devices require moisture protection in addition to protection against a large number of other contaminants. This is especially true for removable and transportable drives. Examples of such applications include disk drives that are used in Personal Computer Memory Card International Association (PCMCIA) slots, music devices, car navigational applications, and in cell phones.

Applicants discovered that the inability of adsorbents to effectively adsorb multiple types of VOCs, other particles, and maintain desired humidity levels can be solved by combining an adsorbent with a catalyst. Although not wanting to be bound by any particular theory, Applicants believe the catalyst enhances the adsorption of VOCs either by chemically altering the VOCs or altering the adsorbent so that more VOCs can be adsorbed by the adsorbent. For example, when the adsorbent is an effective short chain VOC adsorbent, but fails to effectively adsorb long chain VOCs, the catalyst may partially oxidize the long chain VOCs to smaller chain VOCs that can be more readily adsorbed by the adsorbent.

However, it is difficult to combine a catalyst and adsorbent, because many adsorbents are not capable of functioning in the high temperatures usually associated with catalysts used to chemically alter VOCs. Applicants have discovered catalysts that enhance the adsorption of VOCs at low temperatures. By combining these catalysts with VOC adsorbents in a catalytic article, Applicants have discovered that VOCs can be filtered at low temperatures to achieve much lower VOC levels.

According to the invention, a catalytic article for use at low temperatures is provided which comprises combining the catalyst and adsorbent as separate zones of one layer. The adsorbent can include any adsorbent that adsorbs at least short chain VOCs within a temperature of about -20°C to about 80°C, which includes alumina, silica, clay, mineral, zeolite, molecular sieve, titania, and carbon, and blends thereof. The catalyst is a combination of a base metal catalyst, and a platinum group metal catalyst, wherein the base metal catalyst is a manganese based catalyst.

"Low temperature" refers to typical operating temperatures for electronic devices; in some embodiments, low temperature is a temperature of about 100°C or less. In other embodiments, low temperature is a temperature of about 80°C or less. In yet other embodiments, low temperature is a temperature of about 70°C or less.

VOCs that can be adsorbed at low temperatures using the combination of catalyst and adsorbent include short-chain and long-chain VOCs. Long-chain VOCs that can be adsorbed include long chain esters and long chain acids having at least 12 carbon atoms. In other embodiments, esters and acids having at least 16 carbon atoms are adsorbed. In yet other embodiments, esters and acids having at least 26 carbon atoms are adsorbed at low temperatures.

### Catalyst

The catalyst may at low temperatures enhance the ability of an adsorbent to adsorb VOCs of differing chemical make up. The catalyst may chemically alter VOCs or alter the adsorbent to enhance the adsorption. The catalyst is a combination of a platinum group metal catalyst, and a base metal catalyst wherein the base metal catalyst is a manganese based catalyst. The catalyst comprises a mixture of at least one base metal and at least one platinum group metal.

The base metal includes manganese. In many embodiments, the base metal is in the form of an oxide. In one specific embodiment, the base metal catalyst comprises manganese oxide. An exemplary base metal catalyst is **PreinAir™** (manganese based catalyst by BASF).

In other embodiments, a catalyst comprises a mixture of at least two base metal catalysts. The weight ratio of base metals in a catalyst formed for a mixture includes ratios within the range of about 1:100 to about 100:1. In some embodiments the ratio is about 1:10 to about 10:1. In other embodiments the ratio is about 1:3 to about 3:1. In another embodiment, where more than two base metals are included, each base metal can be included in an amount of at least about 1% and not more than about 98% of the total catalyst.

The platinum group metal can include platinum, rhodium, iridium, ruthenium, or palladium, or combinations thereof. In a specific embodiment, a catalyst comprises a mixture of at least two platinum group metals such as platinum, rhodium, iridium, ruthenium, or palladium impregnated on the support. In certain embodiments, the mixture includes platinum and palladium. In other embodiments, the catalyst consists essentially of platinum and palladium. The combination of platinum and palladium enhances the removal of VOCs at low temperatures, for example, a temperature of about 80°C or less.

The weight ratio of platinum group metals in a catalyst formed from a mixture includes ratios within the range of about 1:100 to about 100:1. In some embodiments the ratio is about 1:10 to about 10:1. In other embodiments the ratio is about 1:3 to about 3:1. In a specific embodiment, platinum and palladium are mixed by weight in a ratio of about 1:1. In another embodiment, where more than two platinum group metals are included, each platinum group metal can be included in an amount of at least about 1 % and not more than about 98% of the total catalyst. In certain embodiments, platinum is present in the catalyst in an amount of at least 20%. In other embodiments, palladium is present in the catalyst in an amount of at least 20%.

### Adsorbent

Any VOC adsorbent that adsorbs VOCs at low temperatures may be used in combination with the catalyst, VOC adsorbents typically fail to effectively adsorb all VOCs, especially when the VOC adsorbent selected is also selected on the basis of its ability to adsorb other particles and maintain a desired humidity level within the space. By forming a catalytic article comprising a VOC adsorbent and a catalyst that enhances removal of VOCs at low temperatures, the catalytic article is able to filter VOCs that are typically not adsorbed by the VOC adsorbent alone. For example, in certain embodiments, the catalytic article adsorbs short chain VOCs and long chain VOCs including esters and acids having at least 16 carbon atoms. In further embodiments, the catalytic article adsorbs long chain VOCs including esters and acids having at least 26 carbon atoms in addition to smaller chain VOCs. In other embodiments, the catalyst enables use of VOC adsorbents to remove VOCs that typically would not be effectively adsorbed. This allows the catalytic article to be made with a wide range of VOC adsorbents while still effectively filtering a wide range of VOCs including long chain VOCs.

Typical VOC adsorbents include alumina, silica, clay, mineral, zeolite, molecular sieve, titania, and carbon, and combinations thereof. Exemplary adsorbents include F-200 (alumina based adsorbent by BASF); SORBEAD (silica based adsorbent by BASF); DESICCITE (clay/mineral adsorbent by BASF); SELEXSORB (zeolite/alumina blend by BASF); or ENVISORB (silica/carbon blend by BASF). According to one embodiment, the adsorbent is an activated carbon bead. According to another embodiment, the adsorbent is a zeolite/alumina blend that may be in the form of spheres. In another embodiment, the adsorbent is a zeolite/carbon blend, which can be beneficial because zeolite is known to adsorb polar compounds effectively, while carbon adsorbs non-polar compounds effectively.

The adsorbents can be in any form including spheres, beads, or granules. Different adsorbents are selected having different pore size, particle, size, and surface area depending on the desired class of compounds that are to be adsorbed and the cost of production of the adsorbent. Exemplary adsorbents have high pore size and large particle size. Further, exemplary adsorbents will have high surface area to increase the surface to which the compounds can attach and be adsorbed. In some embodiments, the adsorbents have a surface area on one gram of adsorbent greater than about 200 m². In certain embodiments, the surface area is greater than about 500 m²/g. In other embodiments, the surface area is greater than 1000 m²/g. In a specific embodiment, the surface area is greater than 1500 m²/g.

Exemplary carbon based adsorbents include carbon powder, granules or coatings possessing a high percentage of micropore volume to total pore volume. The micropore volume of exemplary carbon based adsorbents includes volumes from about 0.1 to about 0.6 cm³ per gram of carbon. In further embodiments, the micropore volume is between about 0.2 and about 0.5 cm³ per gram of carbon. In yet a further embodiment, the micropore volume is between about 0.3 and about 0.4 cm³ per gram of carbon. The percentage of micropore volume to total pore volume for exemplary carbon based adsorbents is about 25% or more. In further embodiments, the percentage is more than about 40%. In yet a further embodiment, the percentage is more than about 60%.

The micropore surface area of exemplary carbon based adsorbents includes surface areas from about 200 to about 1300 m² per gram of carbon. In further embodiments, the micropore surface area is from about 400 to about 1000 m² per gram of carbon. In yet a further embodiment, the micropore surface area is from about 700 to about 900 m² per gram of carbon. The percentage of micropore surface area to total pore surface area for exemplary carbon based adsorbents is 20% or more. In further embodiments, the percentage is more than about 50%. In yet a further embodiment, the percentage is more than about 70%.

### Catalytic Article

The catalytic article comprises a combination of a catalyst and an adsorbent. In some embodiments, more than one adsorbent and/or more than one catalyst can be used to form the catalytic article. The combination includes the catalyst and adsorbent as discrete elements of the article. In some embodiments, the combination includes an article or substrate, which contains both an adsorbent and catalyst without any direct interaction between the adsorbent and catalyst.

In some other embodiments, the adsorbent combined with the catalyst is dispersed on a substrate to add structural support to the catalytic article. Exemplary substrates include a net, mesh, film with perforations, honeycombs, or any other material that would allow VOC-containing fluid to pass through during operation. Other exemplary substrates include non-perforated substrates in proximity to where the VOC-containing fluid would pass. Non-perforated substrates could include any solid sheet, film, block or the like. In certain embodiments, the substrate can include the inside surface of the wall of an enclosed space to which the VOCs are to be removed. For example, the substrate could be the inside surface of the wall of the casing surrounding a disk drive. Exemplary materials for the substrate include ceramics, polymers, metals, and combinations thereof. Certain exemplary substrates include membrane materials such as, but not limited to, expanded polytetrafluoroethylene membrane, polypropylene membranes, polycarbonate, and polyester membranes, mixed-esters of cellulose membranes and/or laminates thereof.

In an embodiment, the adsorbent combined with the catalyst can be added to the substrate by dispersing the combination of adsorbent and catalyst onto a plastic patch to be adhered to the substrate. The opposing surface of the patch comprises or accepts an adhesive material. The coated patch can be positioned in any location where the presence of the adsorbent or catalytic material is beneficial. The advantages of a coated patch include use in small locations and use of less particulate material, because the patch enables the material to be concentrated in the area where it is needed for its adsorbent and/or catalytic function.

A plastic patch is a substantially planar body, having length and width dimensions substantially larger than thickness dimension, and having an inward and an outward plastic surface. Generally, the length and width dimensions, as well as the thickness, of the patch can be determined based on the intended use. The length and width dimensions can range from millimeters to meters. Depending on the intended use, the patch can range in thickness from micrometers to centimeters or thicker, for example. A particulate material is adhered to the outward plastic surface of the patch in accordance with the method described herein. The final dry coating on the outward plastic surface typically can have a thickness of about 100-500 µm and a loading of about 100-250 mg/in². The inward surface comprises or accepts an adhesive material to adhere the patch to a surface exposed, for instance, to VOCs. Accordingly, the adhesive material is typically a material that provides adhesion of the patch to a plastic or metal surface. The adhesive material should withstand, without substantial loss of adhesion, repeated and cyclic exposure to gaseous environments. Suitable adhesives are well known in the art.

The patch can be circular, rectangular, arranged in a strip, or configured in any other shape desired. The patch can be stiff or flexible, depending on the intended use. In an embodiment, the patch can be formed from a tough, stretch and tear resistant material. A flexible patch material can be desirable so that the patch can conform to the article to which it is adhered. The patch material can be in the form of a single layer, multiple layers, or a foam. The patch can be a laminate of plastic or of plastic and non-plastic layers. Alternatively the patch can be a single plastic layer. Materials useful for a patch include, but are not limited to, polyethylene, polypropylene, polycarbonate, polyester and the like.

### Catalyst and Adsorbent as Discrete Elements

In the catalytic article, the catalyst can be supported or unsupported. An unsupported catalyst includes particles formed almost completely of catalyst material. A supported catalyst is formed by coating or impregnating catalyst on a separate support particle. Base metal catalysts and platinum group catalysts can be formed as supported or unsupported catalysts. However, typically platinum group catalysts are supported, because forming a particle almost completely from a platinum group metal is typically prohibitively expensive. Exemplary supports for the catalyst include alumina, silica, clay, mineral, zeolite, molecular sieve, titania, zirconia, and carbon, and combinations thereof. In some embodiments, the weight percent of catalyst based on the total weight of the catalyst and support is between 0.1% and 25%. In many embodiments, base metal catalysts, which are cheaper (although they typically do not work as efficiently as platinum group metals) are added in a weight percent between 5% and 20%. In other embodiments, platinum group metals are typically between 0.1% to 10%, and more typically 0.5% to 4% weight percent of the total weight of catalyst and support.

In some embodiments, the weight ratio of catalyst to adsorbent can be between about 1:100 to about 100:1. In further embodiments, the weight ratio is about 1:20 to about 20:1. In yet further embodiments, the weight ratio is between about 1:3 to about 3:1. In a specific embodiment, the weight ratio is 1:1. The catalyst and adsorbent are in separate zones of one layer. By zoning the catalyst and adsorbent, a first portion is coated or embedded with adsorbent and a different portion of the substrate is coated or embedded with catalyst. Catalyst and Adsorbent in a single Element (not according to the invention)

In embodiments where the catalyst and adsorbent are combined to form a single element, the catalyst is supported on the adsorbent. The catalyst is supported on the adsorbent as a coating on the surface or impregnated in the adsorbent. If too much catalyst is supported on the adsorbent, then not enough exposed surface area for adsorbing VOCs is available to maximize removal. However, if too little catalyst is supported on the adsorbent, then not enough catalyst is available to enhance the adsorption of the adsorbent. In some embodiments, the weight percent of catalyst based on the total weight of the catalyst and adsorbent is between 0.1% and 25%. In many embodiments, base metal catalysts, which are cheaper (although they typically do not work as efficiently as platinum group metals) have a weight percentage between 5% and 20%. In other embodiments, platinum group metals are typically between 0.1% to 10%, and more typically 0.5% to 3% weight percent of the total weight of catalyst and adsorbent. In a specific embodiment, the catalyst has a concentration of about 1% by weight of the catalyst and adsorbent.

An exemplary embodiment of a catalyst comprises about 0.5% by weight platinum and 0.5% by weight palladium supported on an adsorbent. In one embodiment, the catalyst is prepared by co-impregnating the mixture of platinum and palladium in the adsorbent by incipient wetness.

Any method known in the art for dispersing a catalyst on a support may be used. In some embodiments, a method of impregnation or vapor deposition can be used to form a catalytic article where the catalyst is supported on the adsorbent. For adsorbent supports used in a filtering capacity, it can be beneficial to use a method of impregnation. Impregnation of the adsorbent can be accomplished through incipient wetness or wet impregnation. In at least one embodiment, the metals are provided in source solutions in order to impregnate the adsorbent. Exemplary platinum group metal source solutions include those derived from nitrate, chloride, acetate, tetraamine hydroxide, or various organic salts. However, any inorganic or organic source solution can be used for platinum group metals or base metals.

After impregnation of the platinum group metals onto the adsorbent, the impregnated adsorbent is calcined. The impregnated adsorbent is optionally dried prior to calcination. In at least one embodiment, the drying and calcination occur in the same oven. The oven used can be a convection air drying oven. Exemplary drying steps include drying at temperatures between about 90°C and about 120°C for at least about 1 hour. In a specific embodiment, the drying step occurs at a temperature of about 110°C for at least about 2 hours. Calcination at higher temperatures can improve the catalytic properties of the metal, but many of the adsorbents cannot be heated to extremely high temperatures. Exemplary calcining steps include temperatures of about 150°C to about 225°C for at least about 1 hour. In a specific embodiment, the calcining step occurs at about 150°C for at least about 1 hour. In embodiments where the adsorbent can withstand higher temperatures, the adsorbent can be calcined at temperatures such as between about 400°C and about 550°C.

In embodiments where the catalyst is a combination of metals, the metals are co-impregnated or sequentially impregnated to incipient wetness of the adsorbent. In an exemplary embodiment in which the adsorbent is co-impregnated, a first solution containing a platinum group metal or base metal and a second solution containing a platinum group metal or base metal are mixed together in deionized water prior to impregnation. In a specific co-impregnation embodiment, a mixture of platinum (II) tetraamine hydroxide solution with approximately 5% platinum by weight, palladium (II) tetraamine hydroxide solution with approximately 7% palladium by weight, and deionized water is co-impregnated onto the adsorbent.

When the catalytic article includes a substrate on which the catalyst supported on the adsorbent is applied, the catalyzed adsorbent can be incorporated in the substrate or layered on the surface of substrate. The catalyzed adsorbent can be layered by a coating process. Where the catalyst and adsorbent are to be layered on the substrate, the catalyst may be coated or impregnated on the adsorbent before the adsorbent is dispersed on the substrate, after dispersion, or both.

### Applications of the catalyst

The catalyst of the above embodiments is suitable for use in many applications. In particular, the catalyst is useful in any low temperature environment having VOCs present. For example, such a catalyst may be used in conjunction with any electronic device that operates at low temperatures, for example about 80°C or less. Exemplary electronic devices include projectors, televisions, and digital storage devices, such as disk drives and solid state drives. The catalytic article would be especially useful in disk drives used in severe environments, such as disk drives used in vehicles, watercraft, or aircraft. The catalytic article could also be used in cabin air VOC removal applications, for example, air in vehicles, watercraft, aircraft, or inside buildings or other structures containing enclosed space.

A specific embodiment includes a method of removing VOCs at low temperature comprising applying a catalyst that chemically alters VOCs at low temperature to a substrate within an enclosed space in which VOCs are to be removed. The low temperature includes temperatures below about 100°C. In further embodiments, the low temperature includes temperatures below about 80°C. In yet a further embodiment, the temperature is below about 70°C.

In some embodiments, the removal of volatile organic compounds (VOCs) at low temperature from a VOC-containing gaseous material in an enclosed space is affected by contacting the VOC-containing gaseous material in an enclosed space with a catalyst, wherein the catalyst is supported on a substrate and wherein the substrate-supported catalyst chemically alters VOCs at low temperature, thereby removing VOCs from the VOC-containing gaseous material. In a further embodiment, the VOC-containing gaseous material is also contacted with an adsorbent that adsorbs VOCs at low temperature that can be supported on the same or a different substrate from the substrate supporting the catalyst. In yet a further embodiment, the substrate can be the inside surface of a wall of the enclosed space or a separate article placed within the enclosed space.

In other embodiments, the catalytic article is located in proximity to an electronic device to allow harmful VOCs to be filtered by the catalytic article. In some embodiments, the catalytic article is located outside or along the outer wall of an electronic device. This location is ideal when the only VOC concern for the electronic device is VOCs entering the device from the environment outside the device. However, in some other embodiments, where materials used in the electronic device itself, such as adhesives and lubricants used in hard disk drives, the catalytic article is located within the device in close proximity to the VOC sensitive parts of the device. In a specific embodiment, the catalytic article is located in a corner of the disk drive casing where the spinning disk creates optimal air flow. More than one catalytic article may be used simultaneously in an electronic device. When plural catalytic articles are present, they may be identical or may be different in terms of the adsorbent and/or the catalyst.

### EXAMPLES

### Example 1: Preparation of a Catalytic Article Where the Catalyst and Adsorbent Form a single element (not according to the invention)

Catalytic articles were prepared by standard incipient wetness impregnation techniques using the following procedure. The available pore volume of the adsorbent support was determined by titrating the bare support with water, while mixing, until incipient wetness was achieved. This results in a determination of the liquid volume capacity per gram of support.

The amount (volume) of each platinum group metal solution needed to achieve the target compositions and target platinum group metal ratio is determined for the amount of support being used. The total volume capacity of the support is calculated from the incipient wetness determination described above. The difference between the volumes of platinum group metal solutions needed and the volume capacity of the support sample is determined.

The amount of platinum (II) tetraamine hydroxide solution and palladium (II) tetraamine hydroxide solution needed to achieve the target composition and ratio is placed in a container and a volume of water equal to the difference between the volumes of platinum and palladium solutions needed and the volume capacity of the support sample is added to the solution. Once the solutions are completely mixed, the resulting platinum group metal solution is combined with the support sample and the two components are mixed until the resulting material is impregnated to incipient wetness.

The resulting solid is dried at about 110°C for a minimum of 2 hours in a convection air drying oven, and then calcined at 150°C for about 1 hour in the same oven. After removal from the oven, the material was allowed to cool in ambient air at room temperature.

### Example 2: Preparation of a Catalytic Article Where the Catalyst and Adsorbent are Discrete Elements of the Catalytic Article (not according to the invention)

Catalytic articles where the catalyst and adsorbent form discrete elements of the article were prepared by using the following procedure. Measure the amount of catalyst in a source solution. Calculate the quantity of adsorbent needed based on the amount of catalyst to achieve the target ratio of catalyst to adsorbent. The amount of adsorbent needed to achieve the target composition and ratio is placed in a container with the catalyst source solution. The container is shaken and mixed on a roll mill or with an overhead mixer.

Calculate quantity of binder needed based on the amount of adsorbent in the container, add that amount of binder and continue to shake and mix on a roll mill or with overhead mixer. Add any thickener needed to achieve the desired viscosity and continue to mix on roll mill or with overhead mixer. Once fully mixed, the resulting slurry can be applied to a substrate and dried.

## Claims

1. A catalytic article for use at low temperatures comprising a combination of a catalyst and an adsorbent, wherein the catalyst is a combination of a platinum group metal catalyst and a base metal catalyst, wherein the base metal catalyst is a manganese based catalyst, and
wherein the catalyst and adsorbent are in separate zones of one layer.

2. The catalytic article of claim 1, wherein the catalyst is supported on a separate support and the supported catalyst is combined with the adsorbent as discrete particles.

3. The catalytic article of claim 2, wherein the separate support is selected from the group consisting of: alumina, silica, clay, mineral, zeolite, molecular sieve, titania, zirconia, and carbon, and combinations thereof.

4. The catalytic article of claim 1, wherein the platinum group metal catalyst is selected from the group consisting of: platinum, rhodium, iridium, ruthenium, and palladium and combinations thereof.

5. The catalytic article of claim 4, wherein the platinum group metal catalyst is a mixture of platinum and palladium.

6. The catalytic article of claim 1, wherein the adsorbent is selected from the group consisting of: alumina, silica, clay, mineral, zeolite, molecular sieve, titania, and carbon, and combinations thereof.

## Patentansprüche

1. Katalytischer Artikel zur Verwendung bei niedrigen Temperaturen, umfassend eine Kombination eines Katalysators und eines Adsorptionsmittels, wobei es sich bei dem Katalysator um eine Kombination eines Platingruppenmetall-Katalysators und eines Nichtedelmetall-Katalysators handelt, wobei ist sich bei dem Nichtedelmetall-Katalysator um einen auf Mangan basierenden Katalysator handelt, und wobei der Katalysator und das Adsorptionsmittel in separaten Zonen einer Schicht vorliegen.

2. Katalytischer Artikel nach Anspruch 1, wobei der Katalysator auf einem separaten Träger geträgert ist und der geträgerte Katalysator mit dem Adsorptionsmittel in Form von diskreten Teilchen kombiniert ist.

3. Katalytischer Artikel nach Anspruch 2, wobei der separate Träger aus der Gruppe bestehend aus Aluminiumoxid, Siliciumdioxid, Ton, Mineral, Zeolith, Molsieb, Titandioxid, Zirconiumdioxid und Kohle und Kombinationen davon ausgewählt ist.

4. Katalytischer Artikel nach Anspruch 1, wobei der Platingruppenmetall-Katalysator aus der Gruppe bestehend aus Platin, Rhodium, Iridium, Ruthenium Palladium und Kombinationen davon ausgewählt ist.

5. Katalytischer Artikel nach Anspruch 4, wobei es sich bei dem Platingruppenmetall-Katalysator um eine Mischung von Platin und Palladium handelt.

6. Katalytischer Artikel nach Anspruch 1, das Adsorptionsmittel aus der Gruppe bestehend aus Aluminiumoxid, Siliciumdioxid, Ton, Mineral, Zeolith, Molsieb, Titandioxid und Kohle und Kombinationen davon ausgewählt ist.

## Revendications

1. Article catalytique destiné à être utilisé à de basses températures comprenant une association d'un catalyseur et d'un adsorbant, dans lequel le catalyseur est une association d'un catalyseur métallique du groupe du platine et d'un catalyseur métallique de base, le catalyseur métallique de base étant un catalyseur à base de manganèse, et
dans lequel le catalyseur et l'adsorbant sont dans des zones séparées d'une couche.

2. Article catalytique selon la revendication 1, dans lequel le catalyseur est supporté sur un support séparé et le catalyseur supporté est associé à l'adsorbant sous forme de particules discrètes.

3. Article catalytique selon la revendication 2, dans lequel le support séparé est choisi dans le groupe constitué par : l'alumine, la silice, l'argile, un minéral, une zéolite, un tamis moléculaire, le dioxyde de titane, la zircone et le carbone, et les associations de ceux-ci.

4. Article catalytique selon la revendication 1, dans lequel le catalyseur métallique du groupe du platine est choisi dans le groupe constitué par: le platine, le rhodium, l'iridium, le ruthénium et le palladium, et les associations de ceux-ci.

5. Article catalytique selon la revendication 4, dans lequel le catalyseur métallique du groupe du platine est un mélange de platine et de palladium.

6. Article catalytique selon la revendication 1, dans lequel l'adsorbant est choisi dans le groupe constitué par: l'alumine, la silice, l'argile, un minéral, une zéolite, un tamis moléculaire, le dioxyde de titane et le carbone, et les associations de ceux-ci.
